# EUROPÄISCHE PATENTSCHRIFT

(11) **EP 3 168 522 B1**
(45) Veröffentlichungstag und Bekanntmachung des Hinweises auf die Patenterteilung: **16.01.2019**
(21) Anmeldenummer: 15193782.8
(22) Anmeldetag: 10.11.2015
(51) Int. Cl.: F17C 1/12, F17C 3/04

(54) **TANK**
TANK
RESERVOIR

(43) Veröffentlichungstag der Anmeldung: 17.05.2017
(73) Patentinhaber: ArianeGroup GmbH, 82024 Taufkirchen (DE)
(72) Erfinder: Behruzi, Kei-Philipp, 28199 Bremen (DE); De Rose, Francesco, 28199 Bremen (DE)
(74) Vertreter: Marschall, Stefan

(56) Entgegenhaltungen:
- EP-A1- 2 157 013
- GB-A- 1 227 033
- GB-A- 1 250 220
- US-A- 3 088 621
- US-A- 4 230 057

## Beschreibung

Die Erfindung betrifft einen Tank bzw. ein Tanksystem, insbesondere ein Tank zum Transport von kryogenen Flüssigkeiten in Tankschiffen.

Der Transport von Flüssiggasen auf dem Wasserweg hat sich inzwischen zu einem ausgereiften Industriezweig entwickelt, dem eine große Flotte von Tankschiffen, ein Netzwerk von Export- und Importterminals sowie ein Schatz an Wissen und Erfahrungen der verschiedenen Personen, die an den Prozessen beteiligt sind, zur Verfügung steht. Gastankschiffe sind mit bestimmten Merkmalen ausgestattet, die sie mit anderen Tankschiffen, die für die Beförderung von flüssigen Massengütern wie Öl und Chemikalien eingesetzt werden, gemein haben.

Flüssiggastanker sind heutzutage eine flexible Alternative zum Transport von Flüssiggas in Pipelines und dienen dem Seetransport verflüssigter Gase als Massengut in fest installierten Ladetanks. Transportierte Gase sind neben technischen Gasen vor allem Flüssigerdgase(LNG liquefied natural gas) und Flüssiggase (LPG liquefied petroleum gas).

Schiffstanks für Flüssiggase lassen sich grundsätzlich in zwei Kategorien einteilen. Es gibt die "nicht freistehenden Tanks", wie die prismatische Membrantanks und die "freistehenden Tanks", wie zum Beispiel die sphärischen MOSS Tanks. Die Membrantanks zeichnen sich dadurch aus, dass sie sich an die äußere Schiffsgeometrie anpassen und - im Vergleich zu sphärischen MOSS Tanks - den zur Verfügung stehenden Raum besser ausnutzen. Dadurch werden diese Schiffe - im Vergleich zu dem beschriebenen MOSS System - leichter bzw. bei gleicher Zuladung kleiner. Jedoch ist hierbei Nachteilig, dass Teilladungen, etwa zwischen 10% und 70% Füllgrad, nicht zulässig sind, da die entstehenden Schwappbewegungen der Flüssigkeit die Tankwände beschädigen können. Außerdem sind die auf den Tank möglichen Druckbeaufschlagungen gering. Kryogene Flüssigkeiten können somit annähernd nur bei Umgebungsdruck transportiert werden. Sie sind somit, im Gegensatz zur Lagerung in sphärischen Tanks, während des Transports in ihrem Sättigungszustand nicht unterkühlt und damit durch erhöhte Verdampfungsverluste beeinträchtigt. Gängige Abdampfraten betragen etwa 0.15% pro Tag. Verdampfungsverluste zu minimieren, ist ein vorrangiges Ziel für diese Transportbehältnisse. Die Effizienz des Flüssigkeitstransports und ggf. die Belastung der Umwelt hängen stark von den Verdampfungsverlusten ab.

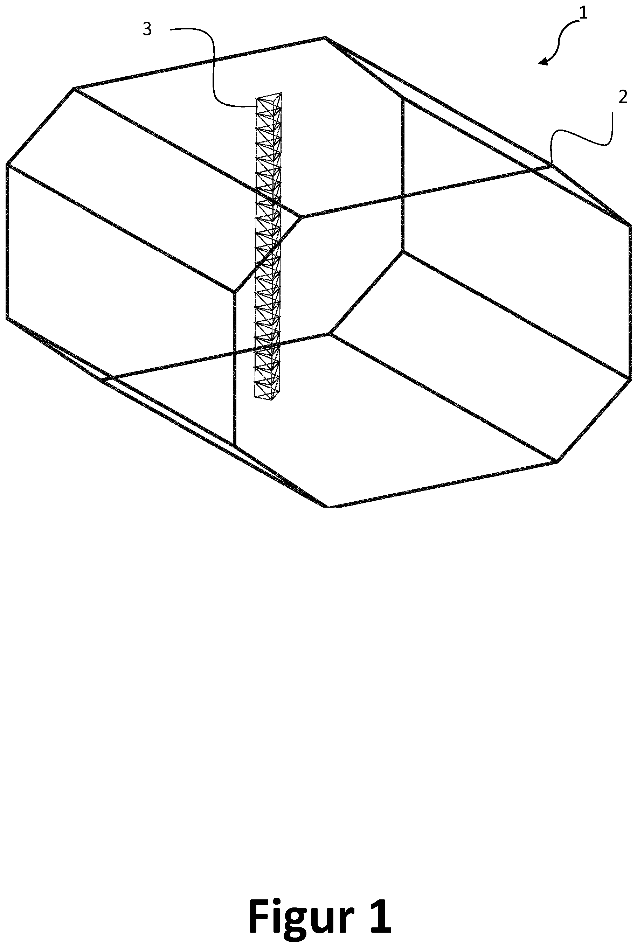

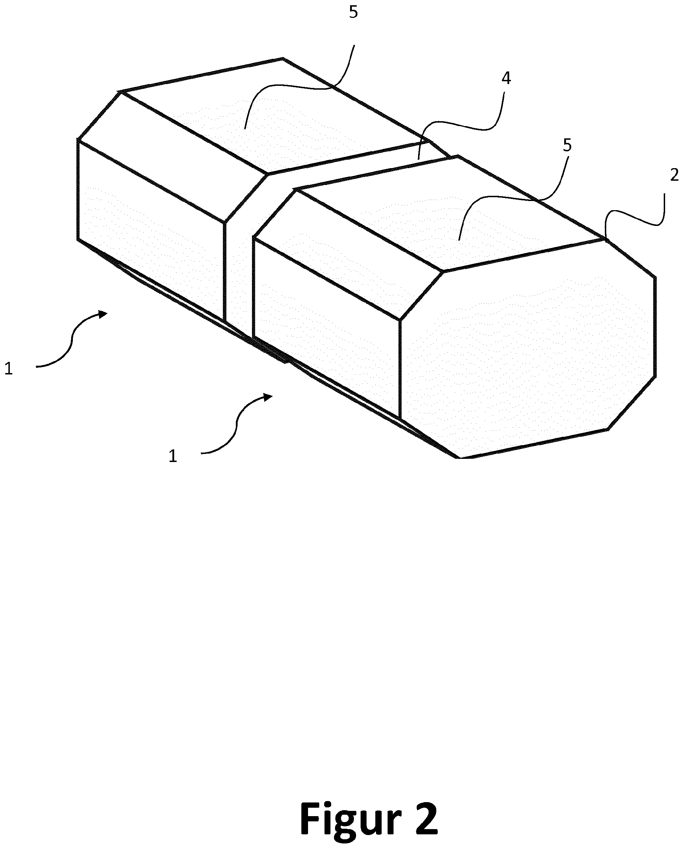

Die Figuren 1 und 2 beschreiben einen konventionellen Membrantank 1, der gängig eine prismatische Grundform 2 aufweist. Die Membran ist so konstruiert, dass sie größere temperaturbedingte Dehnungen aufgrund der Materialeigenschaften und zweckmäßig angeordneten Falzen und Sicken aufnehmen kann. Beim Transport von Flüssiggasen treten zum Beispiel bei LNG als Ladung Temperaturen von - 164 °C bis - 161 °C auf. Beim Werftaufenthalt des Schiffes kann die Temperatur im Tank bis zu 40 °C oder mehr erreichen.

Durch eine innen liegende Leitung 3 - dem sogenannten "Pump Tower" - wird der Membrantank 1 befüllt und entleert. Wie aus der Figur 2 zu entnehmen ist, besteht ein typischer Flüssiggastanker aus einer Reihe mehrerer prismatischer Tanks 1, die durch Zwischenbereiche 4, genannt "Cofferdam", voneinander getrennt sind. Die Temperatur in diesen Zwischenbereichen 4 ist allgemein, im Vergleich zu den tiefkalten Flüssigkeiten, warm.

Aufgrund ihrer prismatischen Form 2, werden diese Membrantanks 1 durch die Schwappbewegungen der Flüssigkeiten stark beeinflusst, so dass sich Schäden ergeben können, insbesondere in der Nähe von Ecken und Kanten, wo besonders hohe Schwappkräfte auftreten können.

Es ist allgemein bekannt, dass die Schwappkräfte durch den zusätzlichen Einbau unterschiedlicher Einbauten reduziert werden kann. WO 2011/129770 A1 beschreibt beispielsweise ein System, in dem die freie Flüssigkeitsoberfläche durch Einbringung einer zusätzlichen Platte stabilisiert wird. WO 2006/014301 A1 beschäftigt sich mit dem gleichen Problem durch Einbringung von Systemen zur Reduzierung der Schwappkräfte in den Ecken des Tanks.

EP2157013A1 offenbart einen Flüssiggasspeichertank mit einer Vielzahl von Räumen, die in zwei Reihen im Inneren eines Schiffs angeordnet sind.

Im Allgemeinen sind solche dämpfenden Systeme dadurch gekennzeichnet, dass sie die Abdampfraten erhöhen, indem sie an der isolierenden Wandstruktur angebracht werden. In der Tat sind die dadurch entstehenden Wärmebrücken der isolierenden Wirkung des Tanks nicht dienlich. Es ist außerdem zu beachten, dass die Befüllungsleitung 3 des Tanks 1 zusätzliche Wärme eindringen lässt. Ein Großteil der in den Tank eindringenden Wärme, erfolgt über die Tankdecke 5, die allgemein deutlich wärmer als die im Tank lagernde Flüssigkeit ist. Werden diese Oberflächen durch Schwappbewegungen kurzzeitig mit Flüssigkeit benetzt, so erhöht sich die Verdampfungsrate.

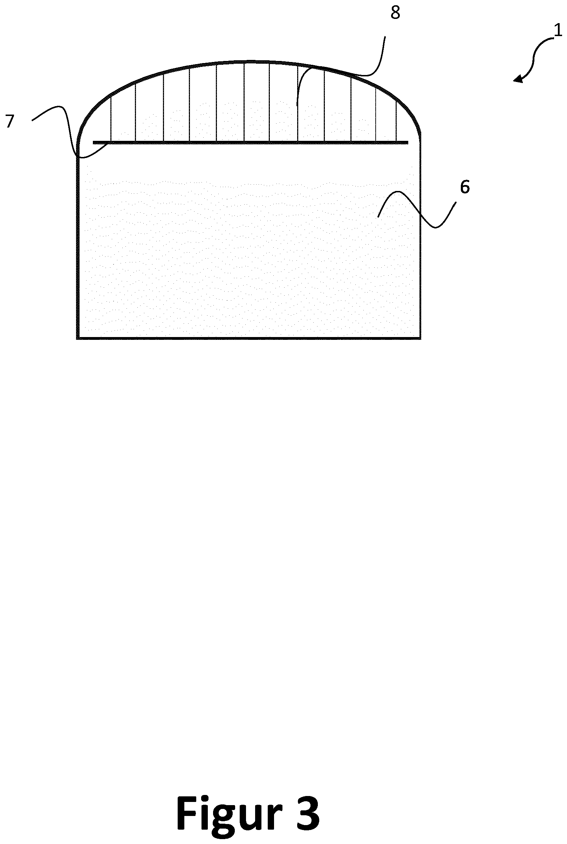

Zusätzliche Verluste durch Wärmestrahlung, sowie die Wärmeleitung durch das Gas, führen zu erhöhten Verdampfungsverlusten. Zur optimierten Lagerung werden daher landgebundene Lagertanks 6 für kryogene Treibstoffe mit abgehängten Zwischendecken 7 genutzt, die z.B. an Seilen 8 gehängt werden. Zwischendecken 7 reduzieren die Abdampfrate erheblich. Ein solcher Tank ist in Figur 3 dargestellt. Jedoch ist ihre Implementierung - für einen Schiffstank zum Transport von Flüssiggasen in Membrantanks - in der vorliegenden Art - nicht geeignet.

Es ist daher die Aufgabe der Erfindung, einen Tank bzw. ein Tanksystem anzugeben, welcher die obengenannten Probleme beseitigt bzw. zumindest verringert und die Schwankbewegungen des Schiffes und den Einfluss der schwappenden Flüssigkeit im Tank berücksichtigt. Diese Aufgabe wird durch einen Tank bzw. ein Tanksystem mit den Merkmalen des Anspruchs 1 gelöst. Zweckmäßige Fortbildungen des Erfindungsgedankens sind Gegenstand der abhängigen Ansprüche.

Der erfindungsgemäße Tank zur Lagerung einer kryogenen Flüssigkeit weist mindestens einen Sammelbehälter mit einem oberen Bereich und einem unteren Bereich auf, um die kryogene Flüssigkeit zu enthalten.

Ferner weist der Tank mindestens ein Mittel zum Ein- und Auslass von Flüssigkeiten und mindestens ein Mittel zum Ein- und Auslass von Gasen. Insbesondere weist ferner der Tank eine Rahmenstruktur auf, die aus einem Wärmedämmmaterial besteht.

Somit wird eine Reduzierung der Abdampfraten erzielt. Diese Reduzierung, zusammen mit einer höheren Zuladung von Flüssigkeit, verbessert deutlich die Wirtschaftlichkeit des Transportmittels.

Vorteilhaft kann das Wärmedämmmaterial, eine Multilayer Insulation, MLI, sein. Dieses Material eignet sich besonders für die Isolation von Leitungen für kryogene Flüssigkeiten oder Gase.

In einer Ausführungsform der Erfindung, besteht der obere Bereich des Sammelbehälters aus stückweise ebenen Flächen, die zusammengesetzt ein zusätzliches Volumen bilden.

In einer weiteren Ausführungsform der Erfindung weist die Rahmenstruktur einen Rahmen mit einer Querrippe und einer Folie aus Wärmedämmmaterial bzw. aus MLI auf, wobei die Folie auf einem Gewebe aufgenäht und das Gewebe beidseitig von der Folie eingefasst wird. Somit kann eine aufgebrachte Kraft durch das Gewebe übertragen werden und die MLI wird nicht belastet bzw. zerstört.

Um die Stabilität der Struktur zu erzielen, liegt die Rahmenstruktur im oberen Bereich flächig in horizontaler Lage und ist - mittels vertikaler Befestigungselemente - an den Behälter fixiert.

In einer noch weiteren Ausführungsform der Erfindung, bilden die vertikalen Befestigungselemente tellerförmige Auflageflächen oder Absätze, auf denen die Rahmenstruktur abgelegt und durch eine Lochscheibe mittels je zwei Bolzen gehalten wird. Somit sind die Rahmenstrukturen fixiert, wobei noch genügend Spielraum besteht, um die auftretenden thermischen Dehnungen der Materialien auszugleichen.

Insbesondere bilden die Bolzen durch einen Federmechanismus eine feste und manuell lösbare Verbindung. Somit können die Rahmenstrukturen sehr schnell und einfach auf- bzw. abgebaut werden.

In einer Ausführungsform der Erfindung weist der Tank eine Mehrheit von Rahmenstrukturen auf, die parallel übereinander liegen und den oberen Bereich ausfüllen.

Um die Isolationswirkung zu verbessern, weist ferner die Rahmenstruktur einen unteren Teil auf, der durch metallische Wellbleche von unten abgeschirmt wird.

In einer besonderen Ausführungsform der Erfindung, weist der Tank eine Mehrheit von Behältern auf, die in Reihe nebeneinander angeordnet und durch einen Zwischenbereich voneinander getrennt sind. Somit wird die Zuladung des Fahrzeuges erhört.

In der eben genannten Ausführungsform, sind das Mittel zum Ein- und Auslass von Flüssigkeiten und das Mittel zum Ein- und Auslass von Gasen in dem Zwischenbereich zweier angrenzender Behälter angeordnet, um möglichst wenig Einbauten in den Tank einzubringen, was sich positiv auf die in den Tank eindringende Wärme auswirkt.

Vorteile und Zweckmäßigkeiten der Erfindung ergeben sich im Übrigen aus der nachfolgenden Beschreibung ausgewählter Ausführungsbeispiele anhand der Figuren. Von diesen zeigen:
- Fig.1: eine Darstellung eines Flüssiggastanks gemäß dem Stand der Technik,
- Fig.2: eine Darstellung einer Struktur von zwei aneinander angrenzenden Flüssiggastanks gemäß dem Stand der Technik,
- Fig.3: eine Darstellung einer Bauweise eines landgebundenen Lagertanks gemäß dem Stand der Technik,
- Fig.4: eine Darstellung eines Flüssiggastanks gemäß einer Ausführungsform der Erfindung,
- Fig.5: eine Darstellung eines Flüssiggastanks gemäß einer Ausführungsform der Erfindung im Querschnitt,
- Fig.6: eine Darstellung einer Struktur von drei aneinander angrenzenden Flüssiggastanks gemäß einer Ausführungsform der Erfindung,
- Fig.7: eine Darstellung einer Rahmenstruktur gemäß einer Ausführungsform der Erfindung,
- Fig.8: eine Darstellung von zusammengesetzten Rahmenstrukturen gemäß einer Ausführungsform der Erfindung,
- Fig.9: eine Darstellung eines Aufbaus von mehrlagigen Rahmenstrukturen gemäß einer Ausführungsform der Erfindung,
- Fig.10: eine Darstellung eines Aufbaus der untersten Rahmenstruktur gemäß einer Ausführungsform der Erfindung,
- Fig.11: eine Darstellung eines Aufbaus der untersten Rahmenstruktur im zusammengesetzten Zustand gemäß einer Ausführungsform der Erfindung,
- Fig.12: eine Darstellung des ersten Montageschritts der Rahmen gemäß einer Ausführungsform der Erfindung,
- Fig.13a, 13b: eine Darstellung des zweiten (a) und dritten (b) Montageschritts der Rahmen gemäß einer Ausführungsform der Erfindung,
- Fig.14a, 14b, 14c: eine Darstellung des Aufbau der Fixierung der Rahmenstruktur gemäß einer Ausführungsform der Erfindung, und
- Fig.15: eine Darstellung eines Aufbaus der Ein- und Auslassleitungen gemäß einer Ausführungsform der Erfindung.

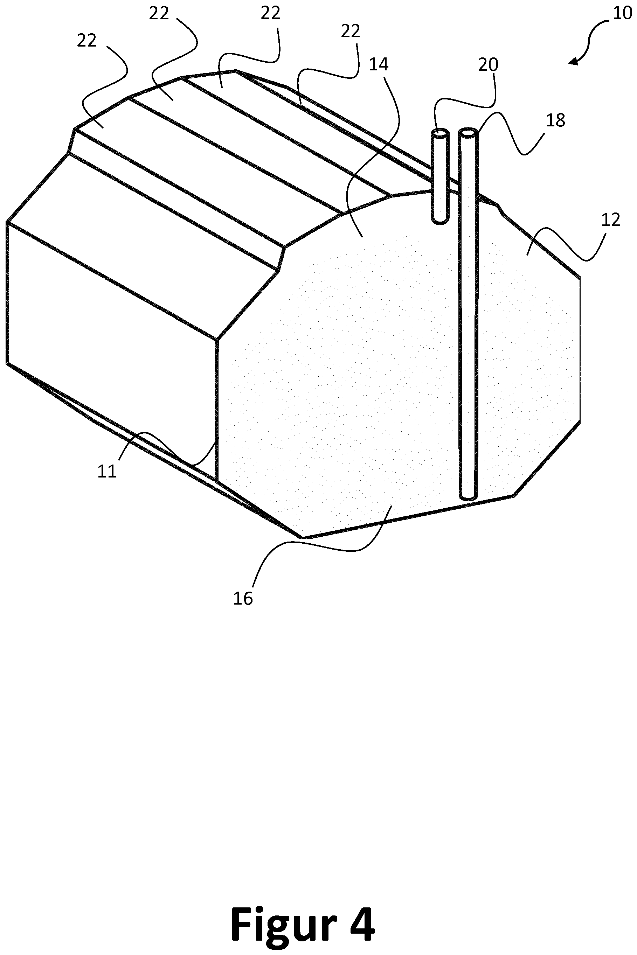

Die Figur 4 beschreibt einen Tank bzw. ein Tanksystem 10 mit einer prismatischer Form 11 zur Lagerung einer kryogenen Flüssigkeit. Der Tank 10 weist einen Sammelbehälter 12 mit einem oberen Bereich 14 und einem unteren Bereich 16 auf. Ferner weist der Tank 10 mindestens ein Mittel 18 zum Ein- und Auslass von Flüssigkeiten und mindestens ein Mittel 20 zum Ein- und Auslass von Gasen. Aus der Figur ist zu entnehmen, dass der obere Bereich 14 stückweise in ebene Flächen 22 unterteilt ist. Somit wird ein zusätzliches Volumen 24 im oberen Teil des Behälters 12 erreicht.

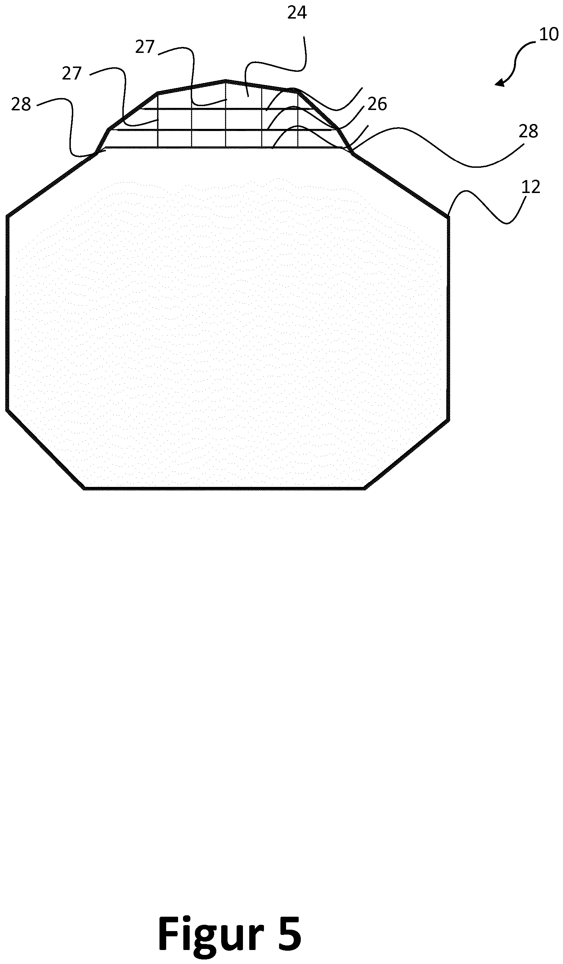

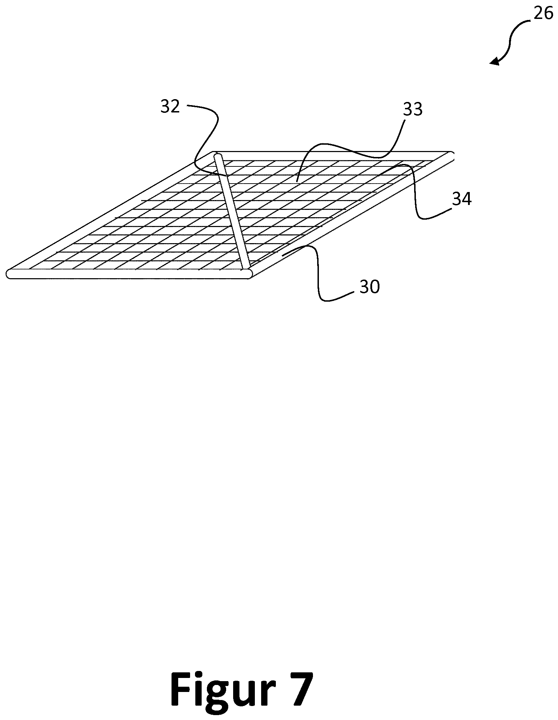

In der Figur 5 wird insbesondere gezeigt, dass in dem zusätzlichen Volumen 24 schichtweise Flächen oder Rahmenstrukturen 26 horizontal angebracht sind. Die Flächen 26 werden durch vertikale Rohre 27 und zusätzliche Fixierungen 28 an den oberen Bereich 14 des Behälters 12 gehalten. Die Anzahl der Flächen 26 kann je nach Tank 10 variieren. Die Flächen 26 bestehen aus Rahmenstrukturen 26 (Fig. 7), die bei der Tankfertigung in ihre Größe gut handhabbar sind.

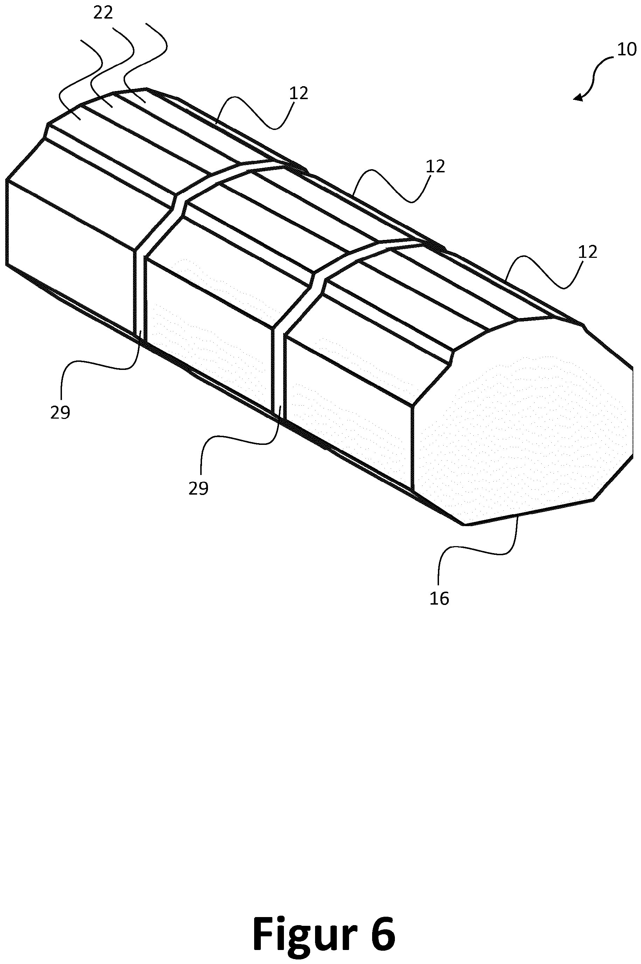

Die Figur 6 beschreibt eine besondere Ausführungsform der Erfindung, indem der Tank 10 aus mehreren, hier beispielhaft drei, nebeneinanderliegenden Sammelbehälter 12 besteht. Zwischen zwei angrenzenden Behältern 12 ist hierbei ein Zwischenbereich 29 angeordnet, der als Trennung der lateralen Wände der Behälter 12 dient.

Die Figur 7 beschreibt den Aufbau einer Rahmenstruktur 26, die einen Rahmen 30 aufweist, der aus nicht metallischen Werkstoffen, zum Beispiel in Form von Glasfaserrohren oder anderen kryo kompatiblen Materialien, besteht. Die Strukturen sollten eine schlechte Wärmeleitung besitzen, so dass die in den Tank 10 einbrachte Wärme gering ist. Eine Querrippe 32 wird hierbei zur Versteifung der Rahmenstruktur 26 eingefügt. Der Rahmen 30 und die Querrippe 32 werden mit einer Folie 33 aus Multilayer Insulation (MLI) Material, das auf einem Gewebe 34 aufgenäht ist, verbunden. Das MLI Material ist aus der Raumfahrt bekannt und wird zur Isolierung von Satelliten im Vakuum eingesetzt. Es besteht aus einer Reihe von sehr dünnen Aluminium Folien. Aus Stabilitätsgründen für den Einsatz in Schiffstanks werden diese Folien 33 zusätzlich auf das benannte Gewebe 34 aufgenäht. Dabei ist zu bemerken, dass das Gewebe 34 beidseitig von MLI umgeben ist, so dass die MLI Rahmenstruktur 26 beidseitig metallische Außenflächen besitzt. Das Gewebe 34 kann aus beliebigem schlecht wärmeleitenden Material bestehen, welches mit der Flüssigkeit und den tiefen Temperaturen von etwa -160°C kompatibel ist. Der Rahmen 30 zusammen mit der Querrippe 32, der Folie 33 aus MLI Material und dem Gewebe 34, bildet somit die MLI Rahmenstruktur 26.

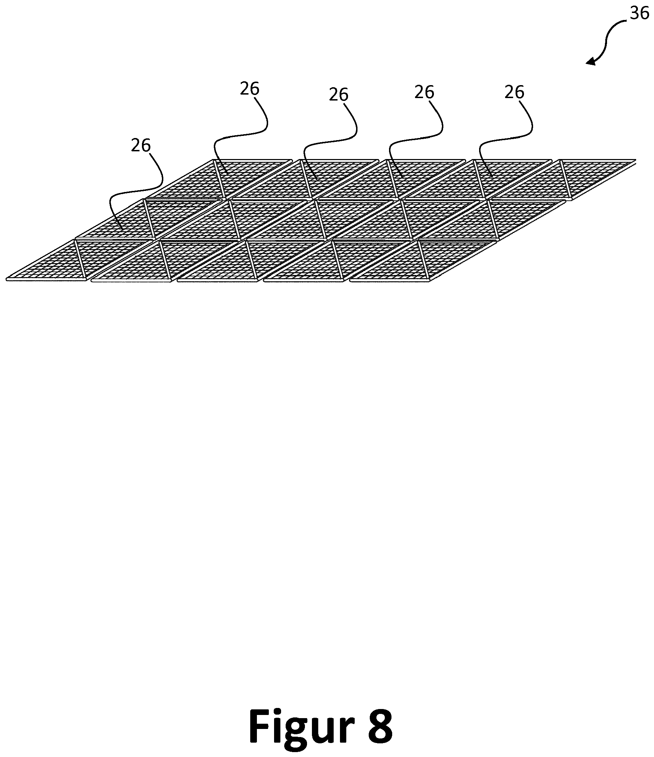

Die Figur 8 beschreibt eine horizontale Anordnung 36, in der eine Mehrheit von Rahmenstrukturen 26 nebeneinander zusammengesetzt werden und eine große flächige Oberfläche bilden. Die Rahmenstrukturen 26 werden hierbei zur Raumoptimierung miteinander verbunden, um den oberen Bereich 14 des Behälters 12 auszufüllen.

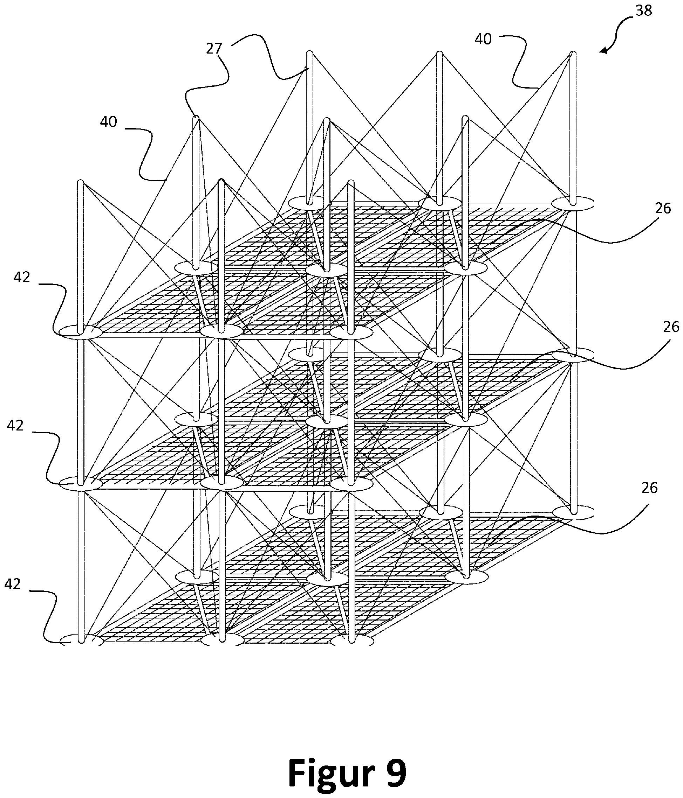

Die Figur 9 beschreibt eine vertikale Anordnung 38, in der die nebeneinander zusammengesetzte Rahmenstrukturen 26 mehrlagig aufeinander angebracht werden. Im Besonderen zeigt die Figur 9 einen Aufbau mit drei Lagen von Rahmenstrukturen 26. Um die Rahmenstrukturen 26 in ihrer Lage zu fixieren, wird hierbei - zusammen mit den vertikalen Rohren oder Streben 27, die aus beliebigem schlecht wärmeleitenden Material bestehen - eine Seilkonstruktion 40 verwendet. Die Konstruktion 40 wird mit einer zusätzlichen Fixierung 28, beispielweise Seilen, im Tank 10 fixiert. Das Material der Seilkonstruktion 40 kann beliebig sein. Die obersten Streben 27 werden mit den flächigen Tankwandelementen 22 mittels bspw. dafür vorgesehener Ösen (nicht dargestellt) verbunden. Als zusätzliches Fixierungsmittel ist an den Ecken jeder Rahmenstruktur 26 eine Lochscheibe 42 vorgesehen, die auf der vertikalen Strebe 27 verschiebbar angebracht wird.

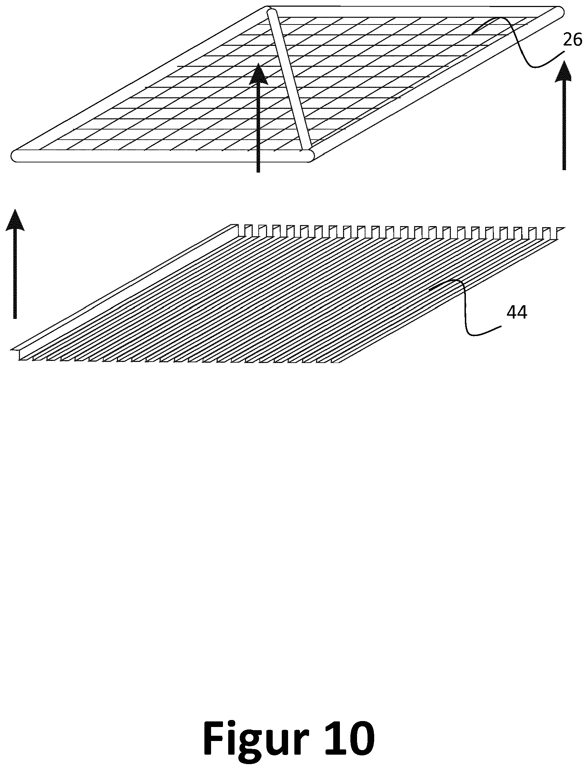

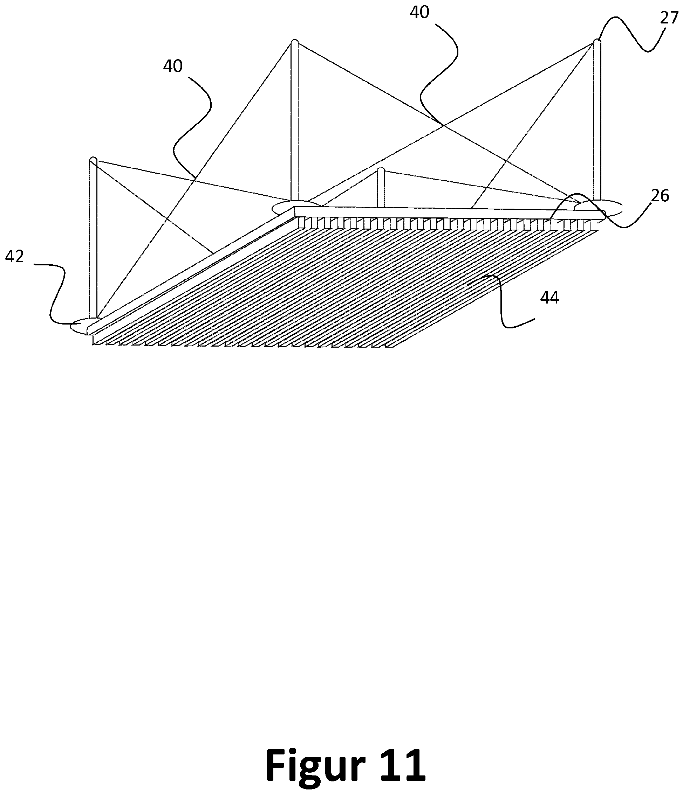

Die unterste Lage der Rahmenstrukturen 26 wird durch ein metallisches Wellblech 44 abgeschlossen, um die darüber liegenden Konstruktionen vor der schwappenden Flüssigkeit zu schützen. Der obere Tankbereich 14 ist hierbei nicht gegenüber dem restlichen Tankvolumen abgeschlossen, sondern offen. Die Figuren 10 und 11 beschreiben den Aufbau der untersten Rahmenstruktur 26 in einem abgebauten und zusammengesetzten Zustand.

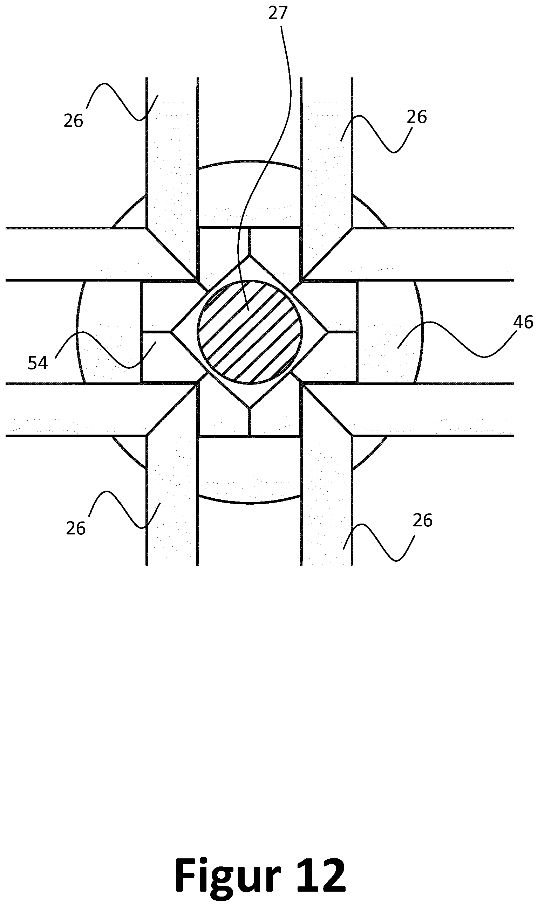

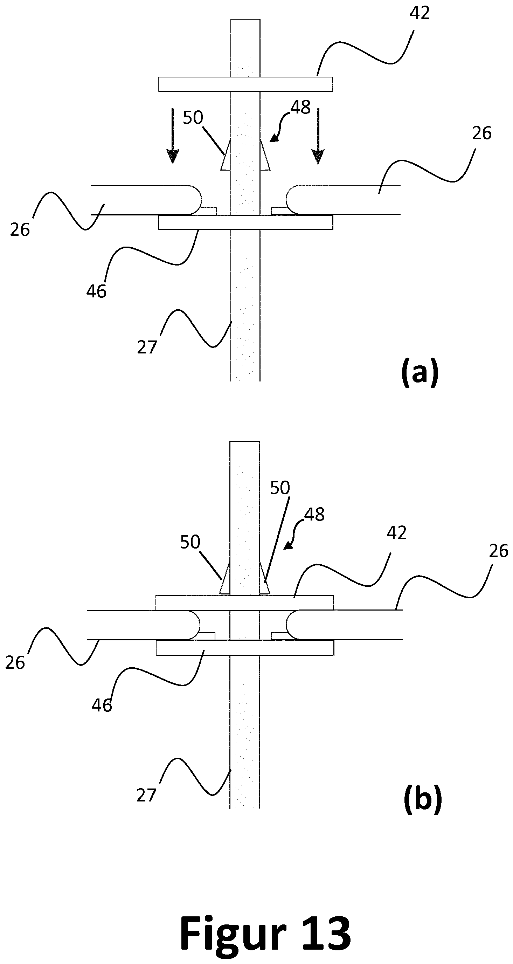

Die Figuren 12, 13a und 13b beschreiben die Montage der Rahmenstrukturen 26 und der vertikalen Streben 27. Diese Montage ist so gestaltet, dass diese Elemente ohne großen Aufwand montiert und später - je nach Bedarf - auch wieder entfernt werden können. Die vertikalen Streben 27 bilden auf der Höhe der Rahmenstrukturen 26 Absätze 46, auf die die Ecken der Rahmenstrukturen 26 abgelegt werden. Im ersten Schritt (Fig.12), werden die Rahmenstrukturen 26 derart angeordnet, dass die unteren Teile der Ecken der jeweiligen vier Rahmenstrukturen 26 auf einem Absatz 46 einer Strebe 27 abgelegt. Im zweiten Schritt (Fig. 13a), wird die Lochscheibe 42 nach unten geschoben und durch einen Blockierungsmechanismus 48 gehalten, sodass die Ecken der jeweiligen vier Rahmenstrukturen 26 zwischen der Lochscheibe 42 und dem Ansatz 46 festgeklemmt werden.

Der Blockierungsmechanismus 48 besteht aus zwei gegenüberliegenden Bolzen 50 und einer Feder 52. Die beiden Bolzen 50 werden durch die Feder 52 nach außen gedrückt. Wird die Lochscheibe 42 über die Bolzen 50 geführt, rastet diese ein und ist somit fixiert. Durch Eindrücken der Bolzen 50, ist die Lochscheibe 42 manuell wieder lösbar.

Die Rahmenstrukturen 26 bilden an ihren Ecken Absätze 54, die sich den benachbarten Rahmenstrukturen 26 und der vertikalen Strebe 27 anpassen und somit in ihrer Lage fixiert sind.

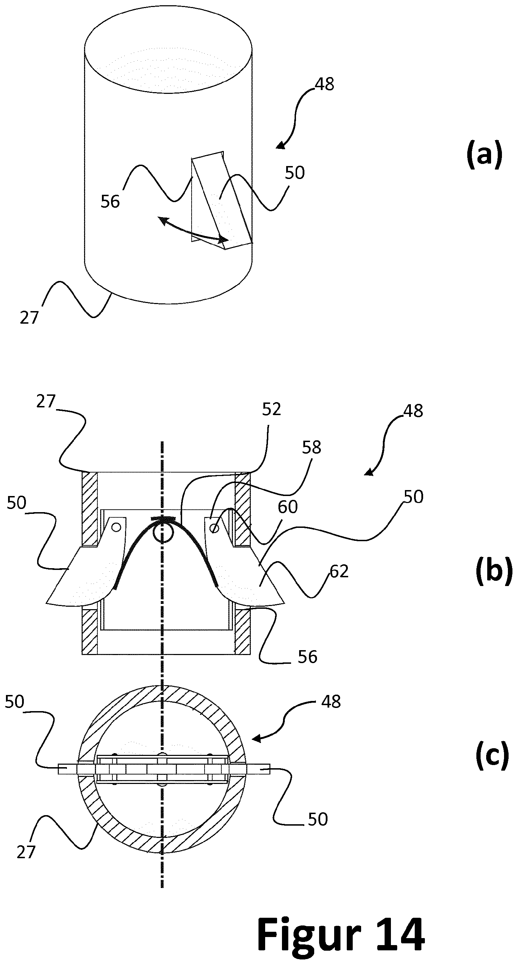

Die Figuren 14a, 14b und 14c beschreiben im Detail den Blockierungsmechanismus 48. Im Besonderen zeigt die Figur 14a die Bewegung des Bolzens 50 gegenüber der Strebe 27 (Doppelpfeil). Die vertikale Strebe 27 weist hierbei zwei gegenüberliegenden Öffnungen 56 auf, wodurch die von der Feder 52 gedruckten Bolzen 50 herausragen. Die Figuren 14b und 14c zeigen einen Querschnitt in Längs- und Querrichtung des Strebe 27, um die Einzelheiten des Blockierungsmechanismus 48 zu erläutern. Die zwei Bolzen 50 weisen jeweils einen ersten Teil 58, der durch ein Befestigungsmittel 60 innerhalb der Strebe 27 fixiert ist und einen zweiten Teil 62, der durch die Öffnung 56 herausragt und die Lochscheibe 42 blockiert. Das Befestigungsmittel 60 erlaubt eine Schwenkung des Bolzens 50, sodass im Ruhezustand der Bolzen 50 durch die Feder 52 nach außen gedrückt und in einem gedrückten Zustand der Bolzen 50 durch die Lochscheibe 42 nach innen gedrückt wird.

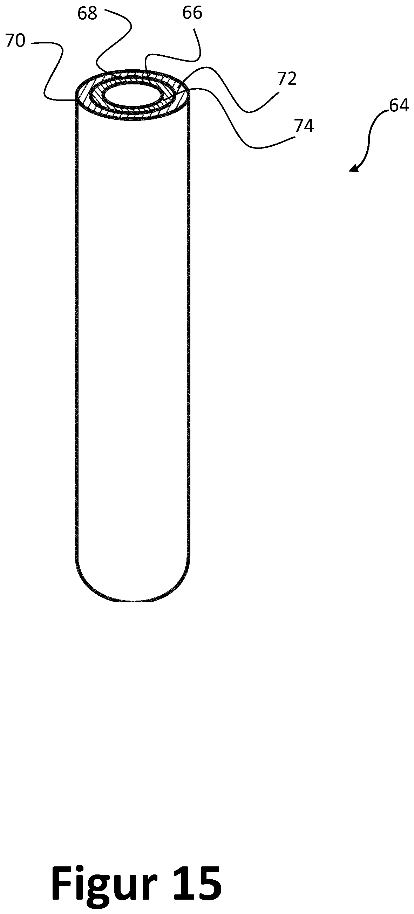

Die Figur 15 beschreibt eine Ausführungsform, in der die Mittel zum Ein- und Auslass von Flüssigkeiten und Gasen aus einer mehrfach Rohr-Struktur 64 gestaltet sind. Die Rohre bestehen aus mindestens dreifach ineinander liegenden Rohren 66, 68, 70, die durch Isolierungsschichten 72 und 74 voneinander getrennt sind. Diese werden in den Zwischenbereichen 29, zwischen den Tanks 10, angebracht und dort fixiert.

Der Tank 10 gemäß der vorliegenden Erfindung kann bis zur Höhe der Wellbleche 44 gefüllt werden. Dies ermöglicht - gegenüber vergleichbaren herkömmlichen Tanks 1 - eine gesteigerte Zuladung. Ein Schiff gleicher Größe, kann mit der Erfindung somit mehr Flüssigkeit transportieren und ist deshalb wirtschaftlicher.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

Offenbart ist Tank bzw. Tanksystem zur Lagerung einer kryogenen Flüssigkeit aufweisend mindestens einen Sammelbehälter mit einem oberen Bereich und einem unteren Bereich, um die kryogene Flüssigkeit zu enthalten, mindestens ein Mittel zum Ein- und Auslass von Flüssigkeiten und mindestens ein Mittel zum Ein- und Auslass von Gasen, wobei der Tank ferner mindestens eine Rahmenstruktur aus einem Wärmedämmmaterial aufweist.

### Bezugszeichenliste

- 1: Konventioneller Tank
- 2: Prismatischer Form
- 3: Leitung (Power Tower)
- 4: Zwischenbereich (Cofferdam)
- 5: Tankdecke
- 6: Lagertank
- 7: Zwischendecke
- 8: Seile
- 10: Tank bzw. Tanksystem
- 11: Prismatische Form
- 12: Sammelbehälter
- 14: Oberer Bereich des Behälters
- 16: Unterer Bereich des Behälters
- 18: Mittel zum Ein- und Auslass von Flüssigkeiten
- 20: Mittel zum Ein- und Auslass von Gasen
- 22: Flachen Bereiche
- 24: Zusätzliches Volumen
- 26: Horizontale Fläche/Rahmenstruktur
- 27: Vertikales Rohr/vertikale Strebe
- 28: Zusätzliche Fixierung
- 29: Zwischenbereich
- 30: Rahmen
- 32: Querrippe
- 33: MLI Material
- 34: Gewebe
- 36: Horizontale Anordnung
- 38: Vertikale Anordnung
- 40: Seilkonstruktion
- 42: Lochscheibe
- 44: Wellenblech
- 46: Absatz der Strebe
- 48: Blockierungsmechanismus
- 50: Bolzen
- 52: Feder
- 54: Absatz der Rahmenstruktur
- 56: Öffnung
- 58: Erster Teil des Bolzens
- 60: Befestigungsmittel
- 62: zweiter Teil des Bolzens
- 64: Rohre-Struktur
- 66,68,70: Rohr
- 72,74: Isolationsschicht

## Patentansprüche

1. Tank (10) zur Lagerung einer kryogenen Flüssigkeit aufweisend:
mindestens einen Sammelbehälter (12) mit einem oberen Bereich (14) und einem unteren Bereich (16), um die kryogene Flüssigkeit zu enthalten;
mindestens ein Mittel (18) zum Ein- und Auslass von Flüssigkeiten; und
mindestens ein Mittel (20) zum Ein- und Auslass von Gasen; wobei
der Tank (10) ferner mindestens eine Rahmenstruktur (26) aus einem Wärmedämmmaterial aufweist,
**dadurch gekennzeichnet dass**,
die Rahmenstruktur (26) einen Rahmen (30) mit einer Querrippe (32) und eine Folie aus Wärmedämmmaterial (33) aufweist, wobei die Folie (33) auf einem Gewebe (34) aufgenäht und das Gewebe (34) beidseitig von der Folie (33) eingefasst wird.

2. Tank (10) nach Anspruch 1, wobei das Wärmedämmmaterial ein Multilayer Insulation, MLI, ist.

3. Tank (10) nach einem der vorhergehenden Ansprüche, wobei der obere Bereich (14) aus stückweise ebenen Flächen (22) besteht, die zusammengesetzt ein zusätzliches Volumen (24) bilden.

4. Tank (10) nach einem der vorhergehenden Ansprüche, wobei die Rahmenstruktur (26) im oberen Bereich (14) flächig in horizontaler Lage liegt und mittels vertikaler Befestigungselemente (27) an den Behälter (12) fixiert ist.

5. Tank (10) nach Anspruch 4, wobei die vertikalen Befestigungselemente (27) tellerförmige Auflageflächen (46) bilden, auf denen die Rahmenstruktur (26) abgelegt und durch eine Lochscheibe (42) mittels je zwei Bolzen (50) gehalten wird.

6. Tank (10) nach Anspruch 5, wobei die Bolzen (50) durch einen Federmechanismus (52) eine feste und manuell lösbare Verbindung bilden.

7. Tank (10) nach einem der vorhergehenden Ansprüche, wobei der Tank (10) eine Mehrheit von Rahmenstrukturen (26) aufweist, die parallel übereinander liegen und den oberen Bereich (14) ausfüllen.

8. Tank (10) nach einem der vorhergehenden Ansprüche, wobei die Rahmenstruktur (26) einen unteren Teil aufweist, der durch metallische Wellbleche (44) von unten abgeschirmt wird.

9. Tank (10) nach einem der vorhergehenden Ansprüche, wobei der Tank (10) eine Mehrheit von Behältern (12) aufweist, die in Reihe nebeneinander angeordnet und durch einen Zwischenbereich (29) voneinander getrennt sind.

10. Tank (10) nach Anspruch 9, wobei das Mittel (18) zum Ein- und Auslass von Flüssigkeiten und das Mittel (20) zum Ein- und Auslass von Gasen im Zwischenbereich (29) angeordnet sind.

## Claims

1. Tank (10) for storing a cryogenic liquid comprising:
at least one collection container (12) with an upper area (14) and a lower area (16) for containing the cryogenic liquid;
at least one means (18) for the inlet and outlet of liquids; and
at least one means (20) for the inlet and outlet of gases;
wherein
the tank (10) further comprises a frame structure (26) of a thermally insulating material,
**characterised in that** the frame structure (26) comprises a frame (30) with a transverse rib (32) and a film of thermally insulating material (33), wherein the film (33) is sewn onto a fabric and the fabric (34) is enclosed on both sides by the film (33).

2. Tank (10) according to claim 1 wherein the thermally insulating material is a multilayer insulation, MLI.

3. Tank (10) according to any one of the preceding claims wherein the upper layer (14) comprises, piece by piece, flat surfaces (22) which put together form an additional volume (24).

4. Tank (10) according to any one of the preceding claims wherein the frame structure (26) in the upper area (14) lies flat in the horizontal position and is fixed to the container (12) by means of vertical fastening elements (27).

5. Tank (10) according to claim 4 wherein the vertical fastening elements (27) form plate-like support surfaces (46) on which the frame structure (26) is placed and through a perforated disk (42) is held by two bolts (50) in each case.

6. Tank (10) according to claim 5 wherein through a spring mechanism (52) the bolts (50) form a firm and manually undoable connection.

7. Tank (10) according to any one of the preceding claims, wherein the tank (10) comprises a plurality of frame structures (26) which lie in parallel above each other and fill the upper area (14).

8. Tank (10) according to any one of the preceding claims wherein the frame structure (26) comprises a lower area which is screened off from below by metallic corrugated sheets (44).

9. Tank (10) according to any one of the preceding claims, wherein the tank (10) comprises a plurality of containers (12) which are arranged in a row next to each other and are separated from each other by an intermediate area (29).

10. Tank (10) according to claim 9 wherein the means (18) for the inlet and outlet of liquid and the means (20) for the inlet and outlet of gases are arranged in the intermediate area (29).

## Revendications

1. Cuve (10) pour le stockage d'un liquide cryogénique, présentant :
au moins un réservoir collecteur (12) doté d'une partie supérieure (14) et d'une partie inférieure (16) pour contenir le liquide cryogénique ;
au moins un moyen (18) d'arrivée et d'évacuation de liquides ; et
au moins un moyen (20) d'arrivée et d'évacuation de gaz ;
la cuve (10) présentant au moins une structure de cadre (26) composée d'un matériau isolant thermique,
**caractérisée en ce que** la structure de cadre (26) présente un cadre (30) doté d'une nervure transversale (32) et d'un film en matériau isolant thermique (33), le film (33) étant cousu sur un textile (34) et le textile (34) étant bordé des deux côtés par le film (33) .

2. Cuve (10) selon la revendication 1, dans laquelle le matériau isolant thermique est un isolant multicouche MLI.

3. Cuve (10) selon une des revendications précédentes, dans laquelle la partie supérieure (14) est composée de surfaces partiellement planes (22) qui constituent une fois réunies un volume supplémentaire (24).

4. Cuve (10) selon une des revendications précédentes, dans laquelle la structure de cadre (26) se situe dans la partie supérieure (14) en surface en position horizontale et est fixée au moyen d'éléments de fixation verticaux (27) au réservoir (12).

5. Cuve (10) selon la revendication 4, dans laquelle les éléments de fixation verticaux (27) forment des surfaces d'appui (46) en forme de plateaux sur lesquelles la structure de quatre (26) est déposée et maintenue par une plaque perforée (42) au moyen de chaque fois deux boulons (50).

6. Cuve (10) selon la revendication 5, dans laquelle les boulons (50) forment un raccordement fixe et dissociable manuellement grâce à un mécanisme de ressort (52) .

7. Cuve (10) selon une des revendications précédentes, dans laquelle le réservoir (10) présente une pluralité de structures de cadres (26) qui sont superposées parallèlement et remplissent la partie supérieure (14).

8. Cuve (10) selon une des revendications précédentes, dans laquelle la structure de cadre (26) présente une partie inférieure qui est isolée du bas par des tôles ondulées métalliques (44).

9. Cuve (10) selon une des revendications précédentes, dans laquelle la cuve (10) présente une pluralité de réservoirs (12) qui sont juxtaposés en rangées et sont séparés les uns des autres par une partie intermédiaire (29) .

10. Cuve (10) selon la revendication 9, dans laquelle le moyen (18) d'arrivée et d'évacuation de liquide et le moyen (20) d'arrivée et d'évacuation de gaz sont disposés dans la partie intermédiaire (29).
